(19) Europäisches Patentamt
European Patent Office
Office européen des brevets

(11) **EP 3 588 441 B1**

(12) **EUROPEAN PATENT SPECIFICATION**

(45) Date of publication and mention
of the grant of the patent:
**09.08.2023 Bulletin 2023/32**

(21) Application number: **18181012.8**

(22) Date of filing: **29.06.2018**

(51) International Patent Classification (IPC):
*G06V 10/44* (2022.01)    *G06V 10/764* (2022.01)
*G06V 10/82* (2022.01)    *G06V 40/18* (2022.01)
*G06F 18/2433* (2023.01)

(52) Cooperative Patent Classification (CPC):
**G06T 11/206; G06F 18/2433; G06V 10/454;
G06V 10/764; G06V 10/82; G06V 40/193**

(54) **IMAGIFICATION OF MULTIVARIATE DATA SEQUENCES**

VERBILDLICHUNG MULTIVARIATER DATENSEQUENZEN

IMAGIFICATION DE SÉQUENCES DE DONNÉES À PLUSIEURS VARIABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.01.2020 Bulletin 2020/01**

(73) Proprietor: **FUJITSU LIMITED
Kanagawa 211-8588 (JP)**

(72) Inventor: **CHATON, Thomas
Southall, Middlesex UB1 3JA (GB)**

(74) Representative: **Haseltine Lake Kempner LLP
Cheapside House
138 Cheapside
London EC2V 6BJ (GB)**

(56) References cited:
**CN-A- 107 609 601    US-A1- 2017 351 708**

- **U. R. Bhabuk: "Advanced Graphs Using Excel :
  Multiple histograms: Overlayed or Back to
  Back", , 29 March 2013 (2013-03-29),
  XP055534305, Retrieved from the Internet:
  URL:http://excelgraphs.blogspot.com/2013/0
  3/overlayed-multiple-histograms.html [retrieved
  on 2018-12-13]**
- **Harkins Susan: "10 steps to adding a gradient
  background to your Excel data points", , 16 June
  2010 (2010-06-16), XP055803863, Retrieved from
  the Internet:
  URL:https://www.techrepublic.com/blog/10-t
  hings/10-steps-to-adding-a-gradient-backgr
  ound-to-your-excel-data-points/ [retrieved on
  2021-05-11]**

**Description**

The present invention relates to image processing, and in particular to the imagification of multivariate data sequences. imagification is a process of representing records of data, or windows of multiple records in sequence, as images such that each record or window shares a one-to-one relationship with a corresponding image that may be used to classify, or make a prediction based on, that record or window using automated image recognition technology. In particular, imagification was designed to be combined with a Convolutional Neural Network based transfer learning approach which enables accurate automated classification with significantly less data than would normally be required.

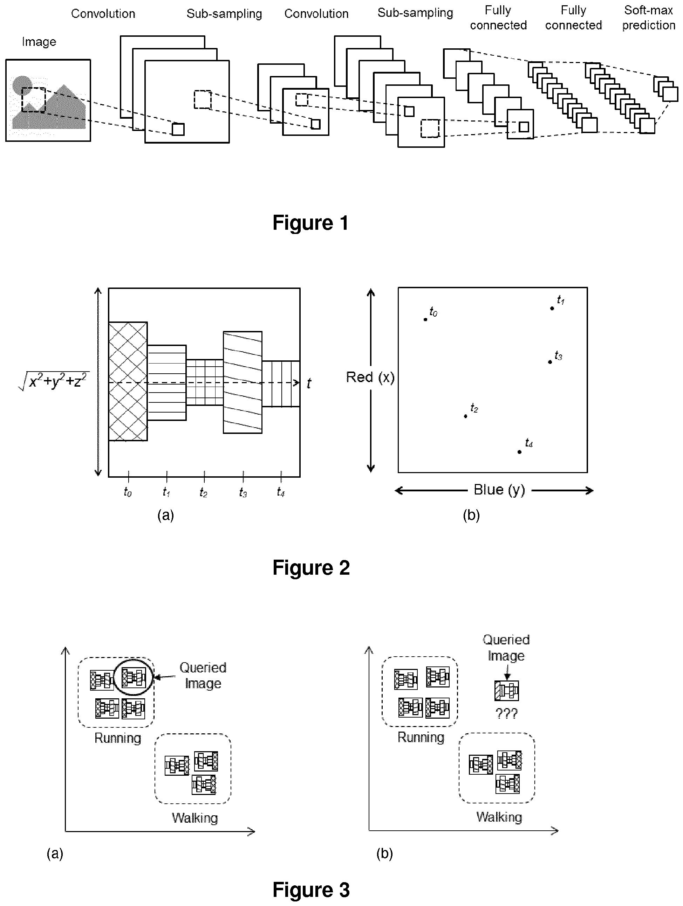

A neural network is a layered network of artificial units which map an input vector (in the input layer) to an output vector (in the output layer) according to numerical weights on edges between units. Weights are adjusted according to a training algorithm. A neural network with multiple layers is known as a Deep Neural Network (DNN). A Convolutional Neural Network (CNN) is a particular type of DNN in which neurons in each layer are grouped into filters, each of which detects the presence or absence of different overlapping features in the input data. As shown in Figure 1 of the accompanying drawings, a multilayer neural network architecture of a CNN may comprise one or more convolutional layers, followed by sub-sampling layers (pooling) and one or more fully connected layers. DNNs, and in particular CNNs, have been proven in many tasks to be highly accurate at classifying images. By transforming non-image data into images, the classification accuracy of such networks may be harnessed and applied to arbitrary datasets.

Furthermore, in addition to classification, CNNs may be used to extract feature vectors (vectors of numbers that uniquely identify each image) from images. Because two similar images will have two similar vectors, a k-nearest-neighbours model (or any vector-based classifier) may classify images based on the similarity of a queried image's vector to vectors of images already seen by the model. Recent research has demonstrated that CNNs provide a powerful and accurate means of extracting features from images and using the extracted features to perform image recognition. The capability of a trained CNN to extract feature vectors in such a way extends to images that the CNN has never seen, even from different subject domains. The process of applying a trained neural network (or indeed any model) to a problem of a different but similar domain is called 'transfer learning', and enables a solution to the new problem to be trained with significantly less data than would otherwise be required. Therefore, transfer learning through CNNs trained on arbitrary images provides a way to classify imagified data samples, even when taken from relatively small datasets.

Classifying trends in time series data had proved difficult in some domains such as finance (e.g. stock market prediction), as had categorization of features in time series data in other domains (such as classification of complex multi-activity data), but by representing this data as images and using pre-trained CNNs to extract complex features it is possible to use these features for prediction. In particular, given an image of time series data within a given time window, image similarity methods can be used to retrieve similar time series data from the past, taking as input the feature vectors extracted from CNNs.

Time series data is an example of a data sequence which may be multivariate. So that such data may be classified using CNNs performing direct classification, using CNN-based transfer learning, or using any other image classification method, it is necessary to transform multivariate data into images which accurately represent that data.

EP3239897A1, the content of which is hereby incorporated by reference, proposes an imagification technique applied to multivariate data. In this technique the data is divided in to segments, according to a sliding window, and for each segment of data different color channels (e.g. Red, Green, Blue) are each mapped to a different continuous variable in that record, and the vector of those variables is mapped to the amplitude of the plot.

That is, multivariate data is imagified by mapping coordinates from each data point in a sequence to a value in some color space. For example, as shown in Figure 2(b) of the accompanying drawings, x, y and (not shown) z values for acceleration, e.g. as measured by a wrist-worn accelerometer, are mapped to red, green and blue color values respectively in an RGB color space. For each data point in the sequence, the vector of the x, y, z values is plotted with the color produced by this mapping to produce an imagification window, as shown in Figure 2(a) of the accompanying drawings in which different colors are represented by different types of hatching. Other image attributes, such as position of plot, pattern of plot, size of plot, shape of plot or transparency of plot, may be used instead of color to map data values.

EP3239897A1 proposes that a transformation using the 3D time series L2 (Euclidean) norm at time T may be used to encode the height of the plot in the image. The L2-norm (also written "$l^2$-norm") $|x|$ is a vector norm defined for a vector

$$\mathbf{x} = \begin{bmatrix} x_1 \\ x_2 \\ \vdots \\ x_n \end{bmatrix} \text{ by } \quad |\mathbf{x}| = \sqrt{\sum_{k=1}^{n} |x_k|^2} \, , \tag{1}$$

(in words, the L2 norm is defined as: 1) square all the elements in the vector; 2) sum these squared values; and 3) take the square root of this sum).

After multivariate data sequences are converted into images, features are then extracted from such images so that the similarity between any two images, and therefore between the data points from which they were derived, may be calculated. Features may have a numeric or categorical value and are usually represented as an N-dimensional vector space for algorithmic processing (where N corresponds to the overall number of features). The goal is to establish an informative set of features that are able to represent the intrinsic properties of the data, while at the same time being sufficiently generic to avoid overfitting the model to a particular dataset.

Features may be extracted using a CNN or any other suitable feature extraction method, and similarity may be based on cosine distance or any other suitable distance metric. Based on the similarity between a queried, unclassified image and images classified earlier, classification and anomaly detection are both possible using methods, such as k-nearest-neighbours, that classify based on similarity. As shown in Figure 3(a) of the accompanying drawings, for classification a queried data point is classified as belonging to the class (e.g. "running" rather than "walking") in which members are closest to that queried point in feature space. As shown in Figure 3(b) of the accompanying drawings, for anomaly detection a queried data point is regarded as anomalous if it is a certain distance in feature space (i.e. sufficiently dissimilar) from any known class.

However, it is desirable to improve upon the method proposed in EP3239897A1. In particular, by using the L2 (Euclidean) norm of the vector for determining the size of the plot in the image, information on how each value of the vector varies independently along its respective axis may be lost. In addition, by using the square of each value in the L2 norm, where values on a given axis have a higher mean than others the other axis will not be used in the same proportion as the one with the higher mean, creating a possible square bias between the training and test datasets. Information on the vector direction may also be lost as the L2 norm does not retain any negative values. Furthermore, the shape of the plot (which may for example be used to represent energy) is symmetrical about the x-axis, which effectively duplicates information and thus makes the model longer to train and evaluate. Finally, the color is fixed column-wise, which prevents the encoding of extra information into the image.

If information is lost in the image transformation process proposed in EP3239897A1, the Bayes Error Rate may be degraded (in statistical classification, Bayes error rate is the lowest possible error rate for any classifier of a random outcome, for example into one of two categories, and is analogous to the irreducible error).

It is desirable to provide a solution to this and/or the other above-mentioned problems in the prior art imagification method.

Reference may also be made to any of the following prior art documents:
U. R. Bhabuk, "Advanced Graphs Using Excel : Multiple histograms: Overlayed or Back to Back", 29 March 2013, and Harkins, Susan: "10 steps to adding a gradient background to your Excel data points", 16 June 2010, which both discuss options for presenting data as histograms in MS Excel™.

US2017/351708A1 which relates to a computer-implemented method for automatically extracting data from a scatter plot. The method comprises receiving a digital image of a scatter plot; analyzing the received digital image for identifying a plurality of pixel sets, each pixel set being a group of adjacent pixels; analyzing the pixel sets in the received image or in a derivative of the received image for generating a plurality of templates; comparing the templates with pixels of a target image for identifying matching templates; identifying data points for the identified similar templates; assigning to each identified data point a data series; and returning the identified data points.

According to a first aspect the present invention provides a computer-implemented image processing method comprising: for a specified multivariate data set, creating a digital image comprising a plurality of superimposed line graphs, each line graph corresponding to a different one of a plurality of variables in the multivariate data set and representing respective values of the variable concerned in successive data items of the multivariate data set; colorizing the created digital image by carrying out a colorization process for each data item of the multivariate data set, the colorization process comprising: for each variable having a positive value in the data item, assigning a color value to pixels representing an area under the line graph for that variable, using a color pre-allocated to that variable and one of the ratio of the value of the variable over a mean value of the data item and the product of the value of the variable with a mean value of the data item; for each variable having a negative value in the data item, assigning a color value to pixels representing an area above the line graph for that variable, using a color pre-allocated to that variable and one of the ratio of the value of the variable over a mean value of the data item and the product of the value of the variable with a mean value of the data item; and summing the color values for pixels where the areas for at least two of the line graphs overlap; and storing the colorized image for use in a data classification process or an anomaly detection process using a deep neural network.

According to a second aspect the present invention provides image processing apparatus comprising: a digital image creator to create, for a specified multivariate data set, a digital image comprising a plurality of superimposed line graphs, each line graph corresponding to a different one of a plurality of variables in the multivariate data set and representing respective values of the variable concerned in successive data items of the multivariate data set; an image colorizer to colorize the created digital image by carrying out a colorization process for each data item of the multivariate data set, the colorization process comprising: for each variable having a positive value in the data item, assigning a color value to pixels representing an area under the line graph for that variable, using a color pre-allocated to that variable and one of the ratio of the value of the variable over a mean value of the data item and the product of the value of the variable with a mean value of the data item; for each variable having a negative value in the data item, assigning a color value to pixels representing an area above the line graph for that variable, using a color pre-allocated to that variable and one of the ratio of the value of the variable over a mean value of the data item and the product of the value of the variable with a mean value of the data item; and summing the color values for pixels where the areas for at least two of the line graphs overlap; and image storage to store the colorized image for use in a data classification process or an anomaly detection process using a deep neural network.

An embodiment according to the first or second aspect may allow multivariate data sets to be transformed into images without any, or almost any, loss of information. In particular, a global multivariate data sequence may be encoded within an image without losing track of the evolution of each data sequence.

In the above-described first and second aspects, assigning a color value may comprise: separating the variables according to whether the value for the variable in the data item is positive or negative; ordering all positive variable values for the data item from the largest value to the smallest value, and for the areas under the line graph corresponding to the positive variable values in order recursively assigning colors to the pixels of those areas; and ordering all negative variable values for the data item from the largest value to the smallest value, and for the areas above the line graph corresponding to the negative variable values in order recursively assigning colors to the pixels of those areas.

In the above-described first and second aspects, the mean value may be the L2 norm.

An embodiment may provide a computer-implemented method for creating a visual representation of a multivariate data sequence (including but not limited to time series data sets) suitable for machine learning applications.

In particular, according to a third aspect the present invention provides a data classification method to classify a multivariate data set, which method comprises: obtaining a colorized image, representing a multivariate data set to be classified, in accordance with the image processing method of the first aspect; inputting the colorized image and at least one pre-classified image into a deep neural network trained for image recognition for the purpose of data classification and using the deep neural network to extract feature vectors representing features of the images; comparing the extracted feature vector of the colorized image with the extracted feature vector of each pre-classified image; and classifying the multivariate data set in accordance with a degree of similarity between the extracted feature vectors of the colorized image and each pre-classified image.

Similarly, according to a fourth aspect the present invention provides an anomaly detection method to detect a potential anomaly in a multivariate data set, which method comprises: obtaining a colorized image, representing a multivariate data set under consideration, in accordance with the image processing method of the first aspect; inputting the colorized image and a pre-classified image into a deep neural network trained for image recognition for the purpose of data classification and using the deep neural network to extract feature vectors representing features of the images; comparing the extracted feature vector of the colorized image with the extracted feature vector of the pre-classified image; and classifying the multivariate data set as anomalous according to a degree of dissimilarity between the extracted feature vectors of the colorized image and the pre-classified image.

Reference will now be made, by way of example, to the accompanying drawings, in which:

Figure 1 (described above) is a diagram for use in explaining the stages of a convolutional neural network;
Figures 2(a) and 2(b) (described above) are diagrams for use in explaining a previously-proposed imagification technique;
Figures 3(a) and 3(b) (described above) are diagrams for use in explaining respectively classification and anomaly detection using images;
Figure 4 is a flowchart of an image processing method according to an embodiment;
Figure 5 is a diagram of image processing apparatus according to an embodiment;
Figure 6 is a flowchart of a method for predicting trends in time series data;
Figure 7 is a diagram illustrating an embodiment of an image processing process;
Figure 8 is a flow chart of the first step of the image processing process of Figure 7;
Figure 9 is a flow chart of the second step of the image processing process of Figure 7;
Figures 10(a) and 10(b) are examples of intermediate images resulting from the second step of the image processing process of Figure 7;
Figure 11 is a flow chart of the third step of the image processing process of Figure 7;
Figures 12(a) and 12(b) are examples of images resulting from the third step of the image processing process of Figure 7;
Figure 13 is another example of an image resulting from the third step of the image processing process of Figure 7;
Figure 14 is a block diagram of a classification system; and

Figure 15 is a block diagram of a computing device suitable for carrying out a method according to an embodiment.

As discussed above it is desirable to achieve an efficient representation of a multivariate sequence of data within images whilst retaining as much of the original data as possible.

To this end an embodiment comprises a new image processing technique, which for convenience may be referred to hereafter *as a* "Multi Area Colorization Technique".

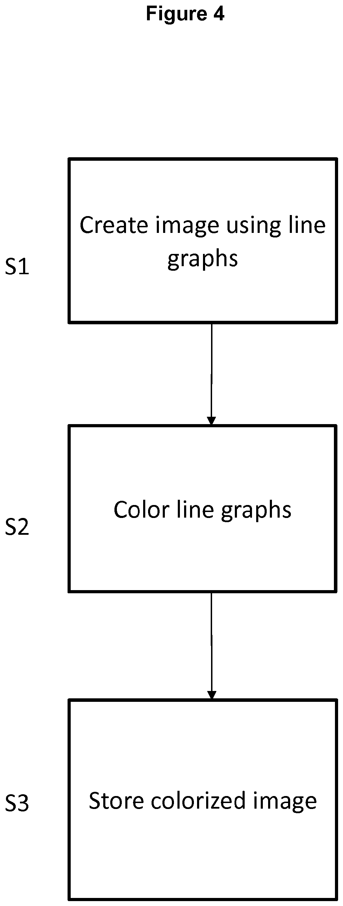

A flowchart of a computer-implemented image processing method according to an embodiment of the Multi Area Colorization Technique is shown in Figure 4. In step S1 a digital image comprising a plurality of superimposed line graphs is created for a specified multivariate data set. Each line graph corresponds to a different one of a plurality of variables in the multivariate data set and represents respective values of the variable concerned in successive data items of the multivariate data set. For example, at each point on the horizontal axis of the line graph the height of the line graph above or below the horizontal axis represents the value of the variable for that data item. In step S2 the digital image created in step S1 is colorized by carrying out a colorization process for each data item of the multivariate data set, as follows. For each variable having a positive value in the data item, a color value is assigned to pixels representing an area under the line graph for that variable in dependence upon a color pre-allocated to that variable and a mean value of the data item. For each variable having a negative value in the data item, a color value is assigned to pixels representing an area above the line graph for that variable in dependence upon a color pre-allocated to that variable and a mean value of the data item. The color values for pixels where the areas for at least two of the line graphs overlap are summed. In step S3 the colorized image is stored.

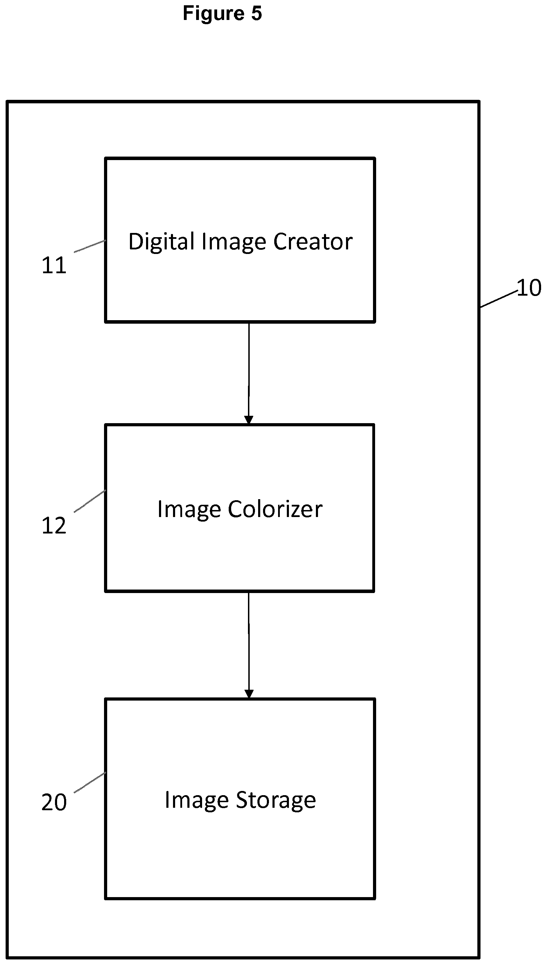

Image processing apparatus 10 for carrying out the method of Figure 4 is shown in Figure 5. Apparatus 10 comprises a digital image creator 11, an image colorizer 12 and image storage 20. Digital image creator 11 is configured to create, for a specified multivariate data set, a digital image comprising a plurality of superimposed line graphs. Each line graph corresponds to a different one of a plurality of variables in the multivariate data set and represents respective values of the variable concerned in successive data items of the multivariate data set. Image colorizer 12 is configured to colorize the created digital image by carrying out a colorization process for each data item of the multivariate data set, as follows. For each variable having a positive value in the data item, a color value is assigned to pixels representing an area under the line graph for that variable in dependence upon a color pre-allocated to that variable and a mean value of the data item. For each variable having a negative value in the data item, a color value is assigned to pixels representing an area above the line graph for that variable in dependence upon a color pre-allocated to that variable and a mean value of the data item. The color values for pixels where the areas for at least two of the line graphs overlap are summed. Image storage 20 is configured to store the colorized image.

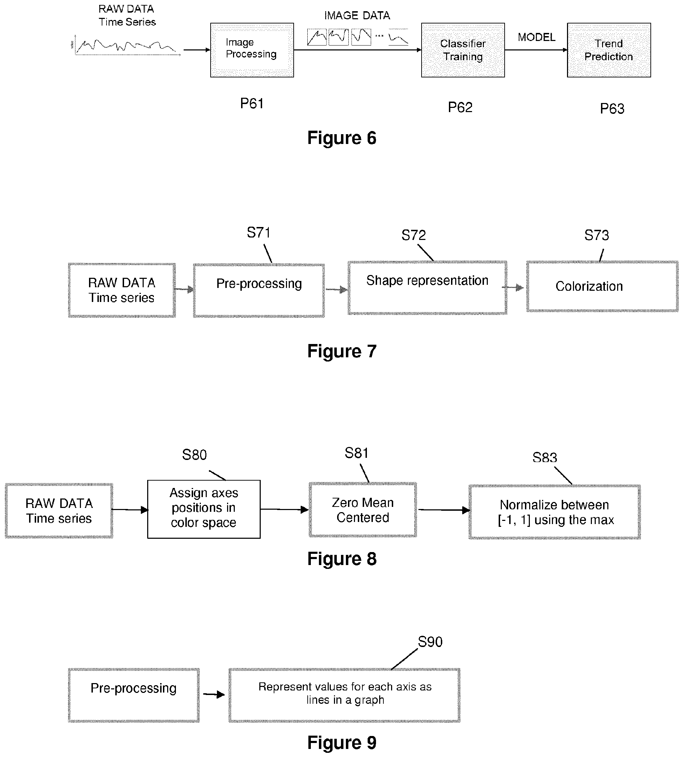

A specific embodiment will now be described with reference to imagification of a multivariate data set comprising time series data with three variables, namely movement along the x-, y- and z-axes, for use in predicting trends in the data set. Figure 6 is a flowchart of a method for predicting trends in time series data. The method may be considered to comprise three distinct processes: image processing (P61), classifier training (P62), and trend prediction (P63). It is with the first of these, image processing, that the present application is concerned.

Figure 7 is a diagram illustrating an embodiment of the image processing process P61, which may be considered to comprise three steps: pre-processing (step S71), shape representation (step S72) and colorization (step S73).

Figure 8 is a flow chart of the pre-processing step S71. At step S80 each of the x, y and z axes is allocated a fixed position in the color channel space of the image. This allocation may be done randomly as long as it is used consistently for the entire data set. Where (as in this example) the number of variables (axes) in the data set is less than or equal to three, it is appropriate to use RGB color channel space. However, for higher dimensions (N-time series) a color space other than RGB may be more appropriate. For example, HSV, HSL and HSP are alternative representations of the RGB color model, designed so as to align more closely with the way human vision perceives color-making attributes, which may be particularly suitable for higher dimensions. Each color will be chosen to make sure that any superposition does not re-create an already-selected color.

Depending upon the nature of the multivariate data set, it may be desirable then to apply filtering, a de-noiser, or a smoother, etc., in order to achieve smoother representation. For example, at step S81 from each item of data its own mean is removed in order to zero-center the data. Such smoothing is optional if the ratio of the means over their variation is small (for example, means = [0.1, 0.01, 0.5] with variations greater than 1).The data values may also be divided, at step S82, by the maximum value of the L2 (Euclidean) norm in order for them to remain in the interval [-1, 1].

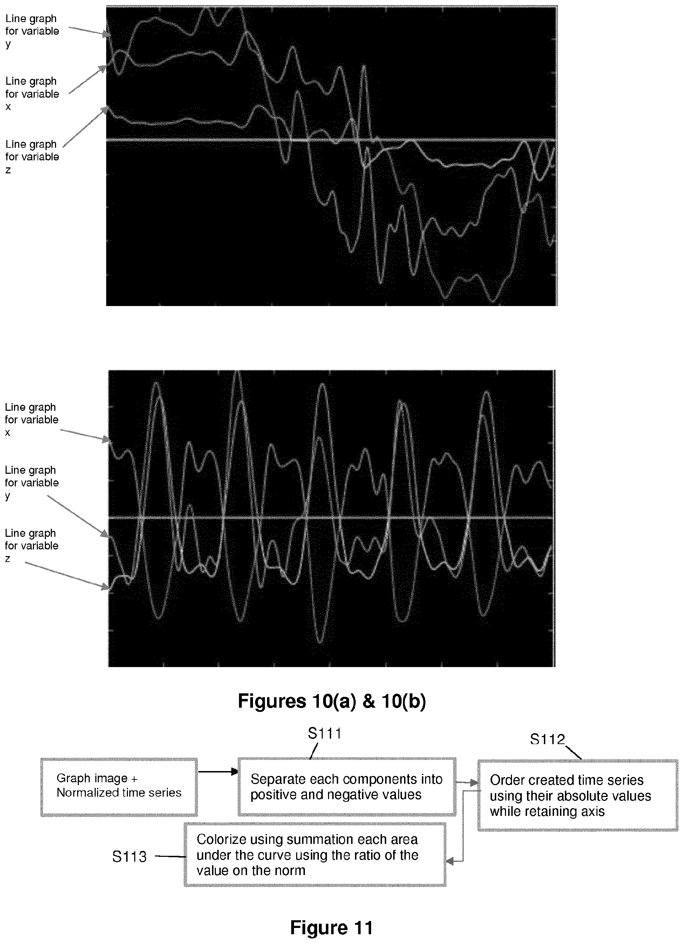

Figure 9 is a flow chart of the shape representation process (step S72). In step S90 the pre-processed data set output from the pre-processing step S71 is represented as lines on a graph. The values in the data set are plotted separately for each variable (axis). The resulting line graphs are intermediate images of the kind which, if displayed, would appear similar to one of those shown in Figures 10(a) and 10(b).

Figure 11 is a flow chart of the colorization process (step S73). In this example, the colorization process involves encoding the angle/direction of the vectors (x, y, z) as colors within the plotted line graphs.

Firstly, at step S111, for a vector (x, y. z) the variables are separated according to whether the value for the variable is positive or negative.

Then, at step S112, any positive values are ordered from the biggest to the smallest and, separately, any negative values are ordered from the biggest to the smallest.

Finally, at step S113, the portions of the graph between the line and the horizontal axis which correspond to the positive values and the portions of the graph between the line and the horizontal axis which correspond to the negative values, are colored. If a plotting library is used to color the graph portions recursively, the graph portions corresponding to the positive values are recursively colored independently to the graph portions corresponding to the negative values.

The re-ordering step S112 is carried out in order to allow use of a plotting library, with which it is only possible to draw a given rectangle with a given color. However, this step is not essential if some other means are used to color the areas under the graphs.

This colorization process is carried out for all vectors in turn until the entire image has been colored.

In each case the color for each variable is chosen according to the ratio or product of the value of the variable over or with a norm of the variable values for the vector. Any norm can be used, e.g. $X = f(X)/norm(f(X))$ with $X = [x, y, z]$, providing the norm of $X[t] = 1$, for example the L2 (Euclidean) norm. When graph portions corresponding to different variables are superimposed, the colors are summed in order to retain relative information about the value of each variable. For example, with the mapping {x:r, y:g, z:b}, for data set $X = [1, -5, 2]$ the L2-norm is 30. Therefore, with a pixel color value range of 0 to 255:

$$R = (1/30)*255$$
$$G = (5/30)*255$$
$$B = (2/30)*255$$

Accordingly, firstly the pixels of the graph portion under the line graph for z having positive height 2 are given the color correspondng to $(2/30)*255$ (=B). Then the pixels of the graph portion under the line graph for x having positive height 1 are given the color corresponding to $(3/30)*255$ (= R+B). The pixels of the graph portion above the line graph for y having negative height -5 are given the color corresponding to $(5/30)*255$. In this way a colorful image representing almost all details of the multivariate data set is achieved.

The image in this case may not represent all details of the data set as the mean of each data set is lost when the values are re-centered around zero to fit into the image.

One drawback is that this method is sensitive to noise around the mean. If the means were conserved as metadata, there would be a bijection between the time series and image + metadata.

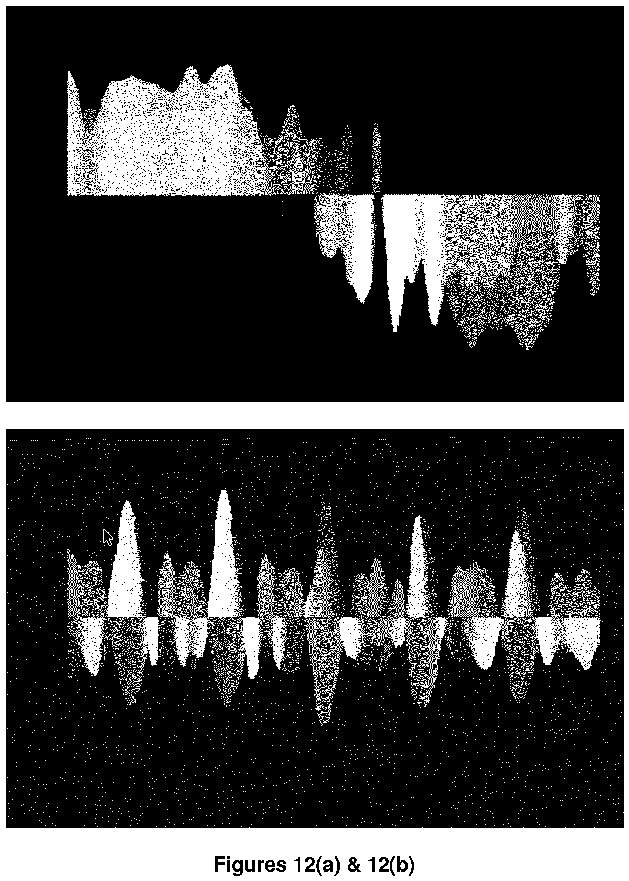

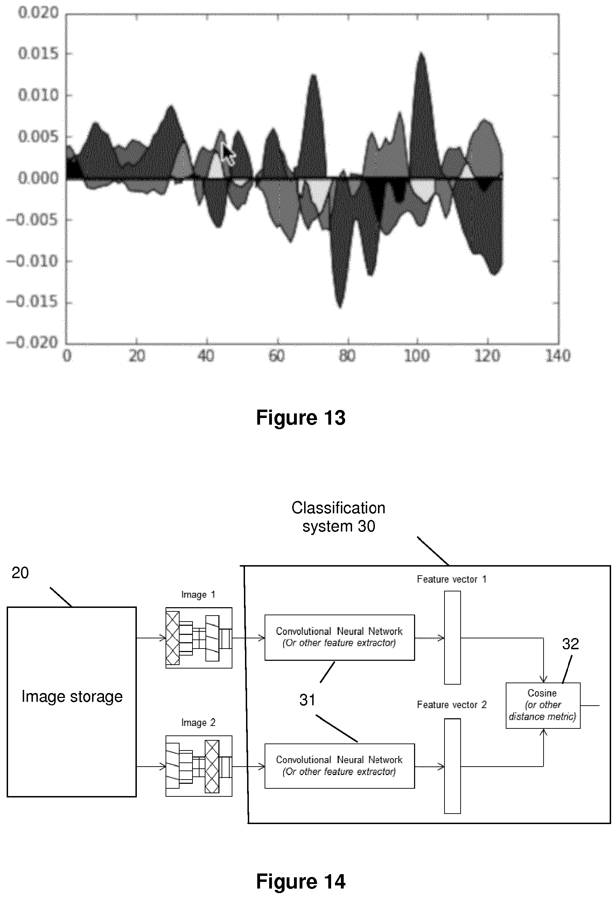

Unfortunately it is not possible in this patent application to present color images, but Figures 12(a) and 12(b) show in corresponding grayscale images created by the the afore-mentioned colorization process so as to correspond to the intermediate images of Figures 10(a) and 10(b) respectively. Another image representing a data set different from that of Figures 10(a)/12(a) and 10(b)/12(b) is shown in Figure 13, where for improved clarity only a very coarse grayscale has been used. However it should be understood that in practice a color image produced by the afore-mentioned technique may be composed of a very large number of different colors, for example 256 where the pixel color value range is 0 to 255.

The above-mentioned technique may for example be implemented using the following image processing algorithm:

```
Fixed randomly attribution:
r -> 'x'
9 -> 'y'
b -> 'z'

For 3D_times_series in dataset:
  x, y, x = 3D_times_series
  x, y, x = x-mean(x), y-mean(y), z-mean(z)
  ###
  Preprocess possible
  ###

  For index, triplet in (x, y, z)
   norm = norm(triplet)
   PositiveorderedIndex = orderIndex(triplet > 0, 'increasing')
   NegativeorderedIndex = orderIndex(triplet < 0, 'decreasing)
  OrderFillUp(PositiveorderedlIndex, (x,y, z,norm))
```

```
OrderFillUp(NegativeorderedIndex, (x,y, z,norm))
```

After a data set has been imagified as discussed, it is classified and/or tested for anomalies as described earlier with reference to Figures 3(a) and 3(b) or by using any other technique capable of such tasks. The images may for example be processed using a classification system 30 as described with reference to Figure 14.

Figure 14 is a block diagram of a classification system 30 configured to receive images, image 1 and image 2, from image storage 20. Image 1 may correspond to a data set which has already been classified, whilst image 2 may correspond to a data requiring classification. Each image is input into a feature extractor 31, in this example a convolutional neural network (CNN), in order to extract from the images respective feature vectors, feature vector 1 and feature vector 2, which represent the features of the images. The feature vectors are input into a similarity determination device 32 which determines the similarity between the feature vectors, and hence the respective corresponding windows of data, based on cosine distance or any other suitable distance metric. Based on the similarity between the unclassified image and one or more images classified earlier, classification and anomaly detection is subsequently carried out using methods, such as k-nearest-neighbours, that classify based on similarity.

One application of the Multi Area Colorization Technique is to the analysis of human activities recorded through wearable and smart sensors. This particular usage is well suited to imagification, where it becomes possible to classify activities based on images where it was not possible when considering the sequence of raw data. Using the above-described technique, it may be possible to get an approximation of Bayes Error Rate and for a human to then classify different activities more easily.

Figures 10(a) and (b) and 12(a) and (b) were created as examples during a machine learning project on a data set known as the UCI Daily and Sports Activities Data Set. The data set comprises motion sensor data of 19 daily and sports activities each performed by 8 subjects in their own style for 5 minutes. Five Xsens MTx units were used on the torso, arms, and legs. The motion sensor time series were imagified using the above described technique and used for further classification.

The process might also be applied to other representation data format as embeddings. For example, in natural language processing, it is possible to obtain a vector representation of a word. The vector representation contains real values that may be considered as time series values, and these values may then be plotted as an image using the above-mentioned technique. Moreover, the imagification may be applied to any embedding. For example, the imagification may be applied over a graph embedding.

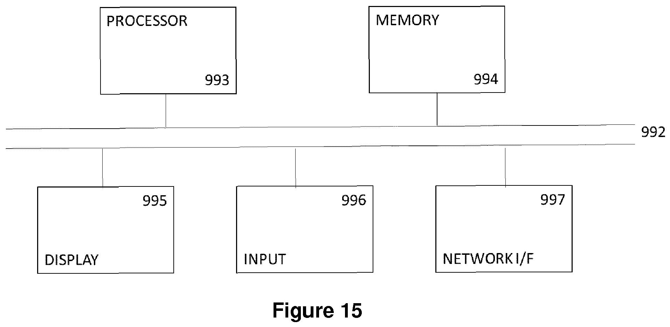

Figure 15 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 15 may be used to implement all the steps of the image processing method illustrated in Figure 4 and perform all the tasks of the image processing apparatus shown in Figure 5, or only to implement the colorization technique of Figure 11 and only to perform the tasks of the image colorizer 12 in Figure 5.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994, which may for example carry out the tasks of computer storage 20 in the image processing apparatus, may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 4, 7, 8, 9 and/or 11 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. For example, the display unit 995 may display the multivariate data to be imagified and the resulting images. The input mechanisms 996 may enable a user to input data, such as the multivariate data to be imagified, and instructions to the computing device.

The network interface (network I/F) 997 may be connected to a network, such as the Internet, and is connectable to other such computing devices via the network, such as the classification system 30. The network I/F 997 may control data input/output from/to other apparatus via the network.

Other peripheral devices such as microphone, speakers, printer, power supply unit, fan, case, scanner, trackerball etc may be included in the computing device.

Methods embodying the present invention may be carried out on a computing device such as that illustrated in Figure 15. Such a computing device need not have every component illustrated in Figure 15, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

## Claims

1. A computer-implemented image processing method comprising:

   for a specified multivariate data set, creating a digital image comprising a plurality of superimposed line graphs, each line graph corresponding to a different one of a plurality of variables in the multivariate data set and representing respective values of the variable concerned in successive data items of the multivariate data set; colorizing the created digital image by carrying out a colorization process for each data item of the multivariate data set, the colorization process comprising:

      for each variable having a positive value in the data item, assigning a color value to pixels representing an area under the line graph for that variable, using a color pre-allocated to that variable and one of the ratio of the value of the variable over a mean value of the data item and the product of the value of the variable with a mean value of the data item; for each variable having a negative value in the data item, assigning a color value to pixels representing an area above the line graph for that variable, using a color pre-allocated to that variable and one of the ratio of the value of the variable over a mean value of the data item and the product of the value of the variable with a mean value of the data item; and summing the color values for pixels where the areas for at least two of the line graphs overlap; and

   storing the colorized image for use in a data classification process or an anomaly detection process using a deep neural network.

2. An image processing method as claimed in claim 1, wherein assigning a color value comprises:

   separating the variables according to whether the value for the variable in the data item is positive or negative; ordering all positive variable values for the data item from the largest value to the smallest value, and for the areas under the line graph corresponding to the positive variable values in order recursively assigning colors to the pixels of those areas; and ordering all negative variable values for the data item from the largest value to the smallest value, and for the areas above the line graph corresponding to the negative variable values in order recursively assigning colors to the pixels of those areas.

3.  An image processing method as claimed in claim 1 or 2, wherein the mean value is the L2 norm.

4.  A data classification method to classify a multivariate data set, which method comprises:

    obtaining a colorized image, representing a multivariate data set to be classified, in accordance with the image processing method of any of claims 1 to 3;
    inputting the colorized image and at least one pre-classified image into a deep neural network trained for image recognition for the purpose of data classification and using the deep neural network to extract feature vectors representing features of the images;
    comparing the extracted feature vector of the colorized image with the extracted feature vector of each pre-classified image; and
    classifying the multivariate data set in accordance with a degree of similarity between the extracted feature vectors of the colorized image and each pre-classified image.

5.  An anomaly detection method to detect a potential anomaly in a multivariate data set, which method comprises:

    obtaining a colorized image, representing a multivariate data set under consideration, in accordance with the image processing method of any of claims 1 to 3;
    inputting the colorized image and a pre-classified image into a deep neural network trained for image recognition for the purpose of data classification and using the deep neural network to extract feature vectors representing features of the images;
    comparing the extracted feature vector of the colorized image with the extracted feature vector of the pre-classified image; and
    classifying the multivariate data set as anomalous according to a degree of dissimilarity between the extracted feature vectors of the colorized image and the pre-classified image.

6.  A computer program which, when stored on a computer, causes that computer to carry out the image processing method of any one of claims 1 to 3, or the data classification method of claim 4, or the anomaly detection method of claim 5.

7.  Image processing apparatus (10) comprising:

    a digital image creator (11) to create, for a specified multivariate data set, a digital image comprising a plurality of superimposed line graphs, each line graph corresponding to a different one of a plurality of variables in the multivariate data set and representing respective values of the variable concerned in successive data items of the multivariate data set;
    an image colorizer (12) to colorize the created digital image by carrying out a colorization process for each data item of the multivariate data set, the colorization process comprising:

        for each variable having a positive value in the data item, assigning a color value to pixels representing an area under the line graph for that variable, using a color pre-allocated to that variable and one of the ratio of the value of the variable over a mean value of the data item and the product of the value of the variable with a mean value of the data item;
        for each variable having a negative value in the data item, assigning a color value to pixels representing an area above the line graph for that variable, using a color pre-allocated to that variable and one of the ratio of the value of the variable over the mean value of the data item and the product of the value of the variable with a mean value of the data item; and
        summing the color values for pixels where the areas for at least two of the line graphs overlap; and
        image storage (20) to store the colorized image for use in a data classification process or an anomaly detection process using a deep neural network.

8.  An image processing apparatus as claimed in claim 7, wherein the image colorizer (12) assigns a color value by:

    separating the variables according to whether the value for the variable in the data item is positive or negative;
    ordering all positive variable values for the data item from the largest value to the smallest value, and for the areas under the line graph corresponding to the positive variable values in order recursively assigning colors to the pixels of those areas; and

ordering all negative variable values for the data item from the largest value to the smallest value, and for the areas above the line graph corresponding to the negative variable values in order recursively assigning colors to the pixels of those areas.

9. An image processing apparatus as claimed in claim 7 or 8, wherein the mean value is the L2 norm.

**Patentansprüche**

1. Computerimplementiertes Bildverarbeitungsverfahren, umfassend:

für einen spezifizierten multivariaten Datensatz, Erstellen eines digitalen Bildes, das eine Vielzahl überlagerter Liniendiagramme umfasst, wobei jedes Liniendiagramm einer unterschiedlichen der Vielzahl von Variablen in dem multivariaten Datensatz entspricht und entsprechende Werte der betreffenden Variablen in aufeinanderfolgenden Datenelementen des multivariate Datensatzes darstellt;

Kolorieren des erstellten digitalen Bildes durch Ausführen eines Kolorierungsprozesses für jedes Datenelement des multivariaten Datensatzes, wobei der Kolorierungsprozess Folgendes umfasst:

für jede Variable, die einen positiven Wert in dem Datenelement aufweist, Zuweisen eines Farbwerts zu Pixeln, die eine Fläche unter dem Liniendiagramm für diese Variable darstellen, unter Verwendung einer Farbe, die dieser Variablen vorab zugeordnet wird, und eines des Verhältnisses des Werts dieser Variablen zu einem Mittelwert des Datenelements und des Produkts des Werts der Variablen zum einem Mittelwert des Datenelements;

für jede Variable, die einen negativen Wert in dem Datenelement aufweist, Zuweisen eines Farbwerts zu Pixeln, die eine Fläche über dem Liniendiagramm für diese Variable darstellen, unter Verwendung einer Farbe, die dieser Variablen vorab zugeordnet wird, und einem des Verhältnisses des Werts dieser Variablen zu einem Mittelwert des Datenelements und des Produkts des Werts der Variablen zu einem Mittelwert des Datenelements;

Summieren der Farbwerte für Pixel, bei denen sich die Flächen für mindestens zwei der Liniendiagramme überlappen; und

Speichern des kolorierten Bildes zur Verwendung in einem Datenklassifizierungsprozess oder einem Anomalieerfassungsprozess unter Verwendung eines tiefen neuronalen Netzes.

2. Bildverarbeitungsverfahren nach Anspruch 1, wobei das Zuweisen eines Farbwerts Folgendes umfasst:

Trennen der Variablen danach, ob der Wert für die Variable in dem Datenelement positiv oder negativ ist;

Ordnen aller positiven Variablenwerte für das Datenelement von dem größten Wert zu dem kleinsten Wert und für die Flächen unter dem Liniendiagramm, die den positiven Variablenwerten entsprechen, um den Pixeln dieser Flächen rekursiv Farben zuzuweisen; und

Ordnen aller negativen Variablenwerte für das Datenelement von dem größten Wert zu dem kleinsten Wert und für die Flächen über dem Liniendiagramm, die den negativen Variablenwerten entsprechen, um den Pixeln dieser Flächen rekursiv Farben zuzuweisen.

3. Bildverarbeitungsverfahren nach Anspruch 1 oder 2, wobei der Mittelwert die L2-Norm ist.

4. Datenklassifizierungsverfahren zum Klassifizieren eines multivariaten Datensatzes, wobei das Verfahren Folgendes umfasst:

Erhalten eines kolorierten Bildes, das einen multivariaten Datensatz darstellt, der klassifiziert werden soll, gemäß dem Bildverarbeitungsverfahren nach einem der Ansprüche 1 bis 3;

Eingeben des kolorierten Bildes und eines vorklassifizierten Bildes in ein tiefes neuronales Netz, das für die Bilderkennung zum Zweck der Datenklassifizierung trainiert wird, und Verwenden des tiefen neuronalen Netzes zum Extrahieren von Merkmalsvektoren, die Merkmale der Bilder darstellen;

Vergleichen des extrahierten Merkmalsvektors des kolorierten Bildes mit dem extrahierten Merkmalsvektor des vorklassifizierten Bildes; und

Klassifizieren des multivariaten Datensatzes gemäß einem Ähnlichkeitsgrad zwischen den extrahierten Merkmalsvektoren des kolorierten Bildes und jedem vorklassifizierten Bild.

5. Anomalieerfassungsverfahren zum Erfassen einer potenziellen Anomalie in einem multivariaten Datensatz, wobei das Verfahren Folgendes umfasst:

Erhalten eines kolorierten Bildes, das einen betreffenden multivariaten Datensatz darstellt, gemäß dem Bildverarbeitungsverfahren nach einem der Ansprüche 1 bis 3;

Eingeben des kolorierten Bildes und eines vorklassifizierten Bildes in ein tiefes neuronales Netz, das für die Bilderkennung zum Zweck der Datenklassifizierung trainiert wird, und Verwenden des tiefen neuronalen Netzes zum Extrahieren von Merkmalsvektoren, die Merkmale der Bilder darstelle

Vergleichen des extrahierten Merkmalsvektors des kolorierten Bildes mit dem extrahierten Merkmalsvektor des vorklassifizierten Bildes; und

Klassifizieren des multivariaten Datensatzes als anomal gemäß einem Unähnlichkeitsgrad zwischen den extrahierten Merkmalsvektoren des kolorierten Bildes und dem vorklassifizierten Bild.

6. Computerprogramm, das, wenn es auf einem Computer gespeichert ist, diesen Computer veranlasst, das Bildverarbeitungsverfahren nach einem der Ansprüche 1 bis 3 oder das Datenklassifizierungsverfahren nach Anspruch 4 oder das Anomalieerfassungsverfahren nach Anspruch 5 auszuführen.

7. Bildverarbeitungsgerät (10), umfassend:

einen digitalen Bildhersteller (11), um für einen spezifizierten multivariaten Datensatz ein digitales Bild zu erstellen, das eine Vielzahl überlagerter Liniendiagramme umfasst, wobei jedes Liniendiagramm einer unterschiedlichen der Vielzahl von Variablen in dem multivariaten Datensatz entspricht und jeweilige Werte der betreffenden Variablen in aufeinanderfolgenden Datenelementen des multivariate Datensatzes darstellt;

einen Bildkolorierer (12) zum Kolorieren des erstellten digitalen Bildes durch Ausführen eines Kolorierungsprozesses für jedes Datenelement des multivariaten Datensatzes, wobei der Kolorierungsprozess Folgendes umfasst:

für jede Variable, die einen positiven Wert in dem Datenelement aufweist, Zuweisen eines Farbwerts zu Pixeln, die eine Fläche unter dem Liniendiagramm für diese Variable darstellen, unter Verwendung einer Farbe, die dieser Variablen vorab zugeordnet wird, und eines des Verhältnisses des Werts dieser Variablen zu einem Mittelwert des Datenelements und des Produkts des Werts der Variablen zu einem Mittelwert des Datenelements;

für jede Variable, die einen negativen Wert in dem Datenelement aufweist, Zuweisen eines Farbwerts zu Pixeln, die eine Fläche über dem Liniendiagramm für diese Variable darstellen, unter Verwendung einer Farbe, die dieser Variablen vorab zugeordnet wird, und einem des Verhältnisses des Werts dieser Variablen zu dem Mittelwert des Datenelements und des Produkts des Werts der Variablen zu einem Mittelwert des Datenelements;

Summieren der Farbwerte für Pixel, bei denen sich die Flächen für mindestens zwei der Liniendiagramme überlappen; und

Bildspeicherung (20) zum Speichern des kolorierten Bildes zur Verwendung in einem Datenklassifizierungsprozess oder einem Anomalieerfassungsprozess unter Verwendung eines tiefen neuronalen Netzes.

8. Bildverarbeitungsgerät nach Anspruch 7, wobei der Bildkolorierer (12) einen Farbwert zuweist durch:

Trennen der Variablen danach, ob der Wert für die Variable in dem Datenelement positiv oder negativ ist;

Ordnen aller positiven Variablenwerte für das Datenelement von dem größten Wert zu dem kleinsten Wert und für die Flächen unter dem Liniendiagramm, die den positiven Variablenwerten entsprechen, um den Pixeln dieser Flächen rekursiv Farben zuzuweisen; und

Ordnen aller negativen Variablenwerte für das Datenelement von dem größten Wert zu dem kleinsten Wert und für die Flächen über dem Liniendiagramm, die den negativen Variablenwerten entsprechen, um den Pixeln dieser Flächen rekursiv Farben zuzuweisen.

9. Bildverarbeitungsgerät nach Anspruch 7 oder 8, wobei der Mittelwert die L2-Norm ist.

**Revendications**

1. Procédé de traitement d'image mis en œuvre par ordinateur comprenant :

pour un ensemble de données à plusieurs variables spécifié, la création d'une image numérique comprenant une pluralité de graphiques linéaires superposés, chaque graphique linéaire correspondant à une variable différente d'une pluralité de variables dans l'ensemble de données à plusieurs variables et représentant des valeurs respectives de la variable concernée dans des éléments de données successifs de l'ensemble de données à plusieurs variables ;

la colorisation de l'image numérique créée en exécutant un processus de colorisation pour chaque élément de données de l'ensemble de données à plusieurs variables, le processus de colorisation comprenant :

pour chaque variable ayant une valeur positive dans l'élément de données, l'attribution d'une valeur de couleur à des pixels représentant une zone sous le graphique linéaire pour cette variable, en utilisant une couleur pré-attribuée à cette variable et l'un du rapport de la valeur de la variable sur une valeur moyenne de l'élément de données et du produit de la valeur de la variable par une valeur moyenne de l'élément de données ;

pour chaque variable ayant une valeur négative dans l'élément de données, l'attribution d'une valeur de couleur à des pixels représentant une zone au-dessus du graphique linéaire pour cette variable, en utilisant une couleur pré-attribuée à cette variable et l'un du rapport de la valeur de la variable sur une valeur moyenne de l'élément de données et du produit de la valeur de la variable par une valeur moyenne de l'élément de données ; et

l'addition des valeurs de couleur pour des pixels où les zones d'au moins deux des graphiques linéaires se chevauchent ; et le stockage de l'image colorisée pour être utilisée dans un processus de classification de données ou un processus de détection d'anomalie à l'aide d'un réseau neuronal profond.

2. Procédé de traitement d'image selon la revendication 1, dans lequel l'attribution d'une valeur de couleur comprend :

la séparation des variables selon que la valeur de la variable dans l'élément de données est positive ou négative ;

le classement de toutes les valeurs de variables positives pour l'élément de données de la plus grande valeur à la plus petite valeur, et pour les zones sous le graphique linéaire correspondant aux valeurs de variables positives afin d'attribuer de manière récursive des couleurs aux pixels de ces zones ; et

le classement de toutes les valeurs de variables négatives pour l'élément de données de la plus grande valeur à la plus petite valeur, et pour les zones au-dessus du graphique linéaire correspondant aux valeurs de variables négatives afin d'attribuer de manière récursive des couleurs aux pixels de ces zones.

3. Procédé de traitement d'image selon la revendication 1 ou 2, dans lequel la valeur moyenne est la norme L2.

4. Procédé de classification de données pour classifier un ensemble de données à plusieurs variables, lequel procédé comprend :

l'obtention d'une image colorisée, représentant un ensemble de données à plusieurs variables à classifier, conformément au procédé de traitement d'image selon l'une quelconque des revendications 1 à 3 ;

l'entrée de l'image colorisée et d'au moins une image pré-classifiée dans un réseau neuronal profond entraîné pour la reconnaissance d'image à des fins de classification de données et l'utilisation du réseau neuronal profond pour extraire des vecteurs de caractéristiques représentant des caractéristiques des images ;

la comparaison du vecteur de caractéristique extrait de l'image colorisée au vecteur de caractéristique extrait de chaque image pré-classifiée ; et

la classification de l'ensemble de données à plusieurs variables conformément à un degré de similarité entre les vecteurs de caractéristiques extraits de l'image colorisée et de chaque image pré-classifiée.

5. Procédé de détection d'anomalie pour détecter une anomalie potentielle dans un ensemble de données à plusieurs variables, lequel procédé comprend :

l'obtention d'une image colorisée, représentant un ensemble de données à plusieurs variables considéré, conformément au procédé de traitement d'image selon l'une quelconque des revendications 1 à 3 ;

l'entrée de l'image colorisée et d'une image pré-classifiée dans un réseau neuronal profond entraîné pour la reconnaissance d'image à des fins de classification de données et l'utilisation du réseau neuronal profond pour extraire des vecteurs de caractéristiques représentant des caractéristiques des images ;

la comparaison du vecteur de caractéristique extrait de l'image colorisée au vecteur de caractéristique extrait de l'image pré-classifiée ; et

la classification de l'ensemble de données à plusieurs variables comme anormal conformément à un degré de dissemblance entre les vecteurs de caractéristiques extraits de l'image colorisée et de l'image pré-classifiée.

6. Programme informatique qui, lorsqu'il est stocké sur un ordinateur, amène cet ordinateur à mettre en œuvre le procédé de traitement d'image selon l'une quelconque des revendications 1 à 3, ou le procédé de classification de données selon la revendication 4, ou le procédé de détection d'anomalie selon la revendication 5.

7. Appareil de traitement d'image (10) comprenant :

un créateur d'image numérique (11) pour créer, pour un ensemble de données à plusieurs variables spécifié, une image numérique comprenant une pluralité de graphiques linéaires superposés, chaque graphique linéaire correspondant à une variable différente d'une pluralité de variables dans l'ensemble de données à plusieurs variables et représentant des valeurs respectives de la variable concernée dans des éléments de données successifs de l'ensemble de données à plusieurs variables ;

un colorisateur d'image (12) pour coloriser l'image numérique créée en exécutant un processus de colorisation pour chaque élément de données de l'ensemble de données à plusieurs variables, le processus de colorisation comprenant :

pour chaque variable ayant une valeur positive dans l'élément de données, l'attribution d'une valeur de couleur à des pixels représentant une zone sous le graphique linéaire pour cette variable, en utilisant une couleur pré-attribuée à cette variable et l'un du rapport de la valeur de la variable sur une valeur moyenne de l'élément de données et du produit de la valeur de la variable par une valeur moyenne de l'élément de données ;

pour chaque variable ayant une valeur négative dans l'élément de données, l'attribution d'une valeur de couleur à des pixels représentant une zone au-dessus du graphique linéaire pour cette variable, en utilisant une couleur pré-attribuée à cette variable et l'un du rapport de la valeur de la variable sur une valeur moyenne de l'élément de données et du produit de la valeur de la variable par une valeur moyenne de l'élément de données ; et

l'addition des valeurs de couleur pour des pixels où les zones d'au moins deux des graphiques linéaires se chevauchent ; et

un stockage d'image (20) pour stocker l'image colorisée pour être utilisée dans un processus de classification de données ou un processus de détection d'anomalie à l'aide d'un réseau neuronal profond.

8. Appareil de traitement d'image selon la revendication 7, dans lequel le colorisateur d'image (12) attribue une valeur de couleur par :

la séparation des variables selon que la valeur de la variable dans l'élément de données est positive ou négative ;

le classement de toutes les valeurs de variables positives pour l'élément de données de la plus grande valeur à la plus petite valeur, et pour les zones sous le graphique linéaire correspondant aux valeurs de variables positives afin d'attribuer de manière récursive des couleurs aux pixels de ces zones ; et

le classement de toutes les valeurs de variables négatives pour l'élément de données de la plus grande valeur à la plus petite valeur, et pour les zones au-dessus du graphique linéaire correspondant aux valeurs de variables négatives afin d'attribuer de manière récursive des couleurs aux pixels de ces zones.

9. Appareil de traitement d'image selon la revendication 7 ou 8, dans lequel la valeur moyenne est la norme L2.

Convolution    Sub-sampling    Convolution    Sub-sampling    Fully connected    Fully connected    Soft-max prediction

Image

**Figure 1**

$$\sqrt{x^2+y^2+z^2}$$

$t$

$t_0$    $t_1$    $t_2$    $t_3$    $t_4$

(a)

Red (x)

$t_0$    $t_1$    $t_3$    $t_2$    $t_4$

Blue (y)

(b)

**Figure 2**

Queried Image

Running

Walking

(a)

Queried Image

???

Running

Walking

(b)

**Figure 3**

# Figure 4

S1

Create image using line graphs

S2

Color line graphs

S3

Store colorized image

# Figure 5

RAW DATA
Time Series

Image
Processing

IMAGE DATA

Classifier
Training

MODEL

Trend
Prediction

P61

P62

P63

**Figure 6**

S71

RAW DATA
Time series

Pre-processing

S72

Shape representation

S73

Colorization

**Figure 7**

S80

RAW DATA
Time series

Assign axes
positions in
color space

S81

Zero Mean
Centered

S83

Normalize between
[-1, 1] using the max

**Figure 8**

S90

Pre-processing

Represent values for each axis as
lines in a graph

**Figure 9**

Line graph
for variable
y

Line graph
for variable
x

Line graph
for variable
z

Line graph
for variable
x

Line graph
for variable
y

Line graph
for variable
z

**Figures 10(a) & 10(b)**

S111

S112

| Graph image + Normalized time series | | Separate each components into positive and negative values | | Order created time series using their absolute values while retaining axis |
|---|---|---|---|---|

S113 — Colorize using summation each area under the curve using the ratio of the value on the norm

**Figure 11**

Figures 12(a) & 12(b)

**Figure 13**

**Figure 14**

**Figure 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3239897 A1

- US 2017351708 A1

### Non-patent literature cited in the description

- **U. R. BHABUK.** *Advanced Graphs Using Excel : Multiple histograms: Overlayed or Back to Back,* 29 March 2013

- **HARKINS, SUSAN.** *10 steps to adding a gradient background to your Excel data points,* 16 June 2010